# EUROPÄISCHE PATENTSCHRIFT

(11) **EP 2 745 980 B1**
(45) Veröffentlichungstag und Bekanntmachung des Hinweises auf die Patenterteilung: **20.03.2019**
(21) Anmeldenummer: 13195254.1
(22) Anmeldetag: 02.12.2013
(51) Int. Cl.: B23P 11/02, F01L 1/047, F16H 53/02, F16B 4/00, F16D 1/08

(54) **Verfahren zum thermischen Fügen von unrunden Funktionsbauteilen auf einer Welle**
Method for the thermal joining of non-circular function components on a shaft
Procédé d'assemblage thermique d'éléments fonctionnels non circulaires sur un arbre

(30) Priorität: 20.12.2012 DE 102012224064; 19.02.2013 DE 102013202657
(43) Veröffentlichungstag der Anmeldung: 25.06.2014
(73) Patentinhaber: MAHLE International GmbH, 70376 Stuttgart (DE)
(72) Erfinder: Beerens, Christoph, 70193 Stuttgart (DE); Dautel, Frank, 70839 Gerlingen (DE); Menonna, Antonio, 71254 Ditzingen (DE)
(74) Vertreter: BRP Renaud & Partner mbB Rechtsanwälte Patentanwälte Steuerberater

(56) Entgegenhaltungen:
- EP-A2- 0 365 757
- WO-A1-02/26429
- CH-A- 461 183
- DE-A1- 19 624 048
- DE-A1-102006 036 820
- DE-A1-102008 064 194
- DE-C1- 19 521 755
- JP-A- H04 365 907

## Beschreibung

Die vorliegende Erfindung betrifft ein Verfahren zum thermischen Fügen von unrunden Funktionsbauteilen auf einer Welle, insbesondere zum thermischen Fügen von Nocken auf einer Nockenwelle.

Beim Fügen von unrunden, asymmetrischen Funktionsbauteilen, insbesondere beim thermischen Fügen von Nocken (Pumpennocken oder Ventilbetätigungsnocken) auf Nockenwellen, kann es durch den Querpresssitz und die damit einhergehende Überdeckung zwischen Nockenbohrung und Nockenwellenrohrdurchmesser zu einer Verformung des Rohres, das heißt der Welle, im Bereich der Funktionsbauteile, das heißt im Bereich der Nocken kommen. Dies kann bei Lagerstellen, die zu den Funktionsbauteilen benachbart angeordnet sind, zu Abweichungen bezüglich der runden Form führen, die außerhalb der Vorgaben für eine gute Lagerung liegen. Eventuell müssen in derartigen Fällen die Lagerstellen nach dem Fügen der Funktionsbauteile nachgeschliffen werden, was jedoch einen zusätzlichen Fertigungsschritt darstellt, da die Welle ja bereits vorab geschliffen wurde. Der zusätzliche Fertigungsschritt ist nicht nur aufwändig und zeitintensiv, sondern auch teuer.

Aus der CH 461 183 A ist ein Verfahren zur Befestigung eines Maschinenteils mit voller, ungeschlitzter Form an einer zylindrischen Fläche eines anderen Teils bekannt.

Aus der DE 10 2008 064 194 A1 sind ein Verfahren und eine Vorrichtung zur Positionierung und zur Montage mehrerer Funktionselemente bekannt. Hierbei wer den die Funktionselemente, beispielsweise Nocken, Lager oder Zahnräder, im Inneren eines darüber gestülpten Gehäuses zunächst derart positioniert, dass alle Ausnehmungen und Durchbrechungen des Gehäuses für eine Welle in einer Flucht auf einer gemeinsamen Geraden liegen. Anschließend wird die zuvor gekühlte Welle von außen durch die Durchbrechungen des Gehäuses sowie die Ausnehmungen der Funktionselemente in Fügerichtung eingeschoben.

Die vorliegende Erfindung beschäftigt sich daher mit dem Problem, ein verbessertes Verfahren zum thermischen Fügen von unrunden Funktionsbauteilen auf einer Welle anzugeben, bei welchem Abweichungen der Welle nach dem thermischen Fügen des Funktionsbauteils zumindest minimiert, vorzugsweise sogar eliminiert werden können.

Dieses Problem wird erfindungsgemäß durch den Gegenstand des Anspruchs 1 gelöst. Vorteilhafte Ausführungsformen sind Gegenstand der abhängigen Ansprüche.

Die vorliegende Erfindung beruht auf dem allgemeinen Gedanken, ein unrundes Funktionsbauteil zum thermischen Fügen auf einer Welle, beispielsweise einen Nocken zum thermischen Fügen auf einer Nockenwelle, während des Einbringens einer runden Durchgangsöffnung, das heißt beispielsweise beim Bohren der Nockenbohrung, elastisch vorzuspannen, das heißt elastisch zusammen zu drücken, so dass sich nach dem Entspannen eine unrunde Durchgangsöffnung ergibt. Diese unrunde Durchgangsöffnung bewirkt nach dem thermischen Fügen mit der Welle, dass sich diese nicht oder zumindest nur minimal verformt, so dass die Welle nach dem thermischen Fügen ihre kreisrunde Form behält, was insbesondere für benachbart zu den Funktionsbauteilen angeordneten Lagerstellen von überragender Bedeutung ist. Durch das Verhindern der Verformung der Welle nach dem Abkühlen der damit gefügten Funktionsbauteile ist insbesondere ein bisher unter Umständen erforderliches aufwändiges und dadurch auch teures Nachbearbeiten der Welle, beispielsweise ein Nachschleifen, nicht mehr erforderlich, so dass die Funktionsbauteile, das heißt im konkreten Fall die Nocken, bereits in fertig bearbeitetem Zustand mit der Welle gefügt werden können. Zweckmäßig wird das Funktionsbauteil während des Einbringens der Durchgangsöffnung mittels einer Backenspannvorrichtung elastisch zusammengedrückt, das heißt elastisch vorgespannt. Eine derartige Backenspannvorrichtung kann beispielsweise drei oder vier Backen aufweisen, die individuell kraft- oder weggesteuert gegen das zu fertigende Funktionsbauteil gepresst werden können, wodurch dieses in einen elastischen Verformungszustand überführt wird. In diesem elastischen Verformungszustand wird nun die Durchgangsöffnung, beispielsweise eine Nockenbohrung, eingebracht, die zunächst eine kreisrunde Form aufweist. Wird die Backenspannvorrichtung entspannt, das heißt die Backen von dem Funktionsbauteil abgenommen, so verformt sich dieses elastisch wieder in seinen ursprünglichen Ausgangszustand, wodurch die ursprünglich runde Durchgangsöffnung nunmehr in eine annähernd ovale Form übergeht. Diese ovale bzw. unrunde Form bewirkt beim thermischen Fügen, bei welchem die Welle beispielsweise gekühlt und/oder das Funktionsbauteil erhitzt werden, dass nach einem Temperaturausgleich vorzugsweise ausschließlich gleich große über den Umfang der Durchgangsöffnung verteilte Radialkräfte auf die Welle, das heißt insbesondere auf die Nockenwelle, einwirken, wodurch diese zwar eine erhebliche Querpressung erfährt, nicht jedoch ihre ursprünglich runde Form verliert.

Bei einer weiteren vorteilhaften Ausführungsform des erfindungsgemäßen Verfahrens wird die Durchgangsöffnung gebohrt, geschliffen, gerieben, gedreht oder gefräst. Bereits diese nicht abschließende Aufzählung lässt erahnen, wie vielfältig die Möglichkeit der Herstellung einer Durchgangsöffnung bzw. einer Durchgangsbohrung in dem Funktionsbauteil, beispielsweise dem Nocken, ist. Üblicherweise wird die Durchgangsöffnung gebohrt und anschließend mittels eines spanabhebenden Werkzeugs, beispielsweise eines Fräswerkzeugs, oder eines Schleifwerkzeugs nachbearbeitet.

Zweckmäßig erfolgt das elastische Drücken zum Vorspannen des Funktionsbauteils mittels der einzelnen Backen der Backenspannvorrichtung kraftgesteuert oder weggesteuert. Je nach Ausbildung des vorzuspannenden Funktionsbauteils kann es sinnvoll sein, eine Kraftsteuerung bzw. eine Wegsteuerung der einzelnen Backen der Backenspannvorrichtung vorzunehmen. Die Kraft- und Wegsteuerung muss zur Deformierbarkeit des Funktionsbauteils ausgewogen erfolgen, um in jedem Falle eine gute Zentrierung der wenn auch deformierten Bohrung zu erreichen. Das ermöglicht es erst, fertigbearbeitete Funktionsbauteile, also insbesondere Nocken, im Sinne der Erfindung zu bearbeiten und ohne notwendige Nacharbeit auf der Wellen fügen zu können. Ein weggesteuertes Spannen hat den Vorteil keine aufwändigen Kraftmesseinrichtungen in der Spannvorrichtung platzieren zu müssen, sondern nur über den, beispielsweise über eine Präzisionsspindel, zurückgelegten Weg zu erfassen. Ein kraftgesteuertes Spannen des Funktionsbauteils würde aber in einer höheren Präzision münden. Auch ist es im Rahmen der Entwicklung mittels Simulationen einfacher die Deformation des Funktionsbauteils durch Anbringen von Kräften zu berechnen als durch das Verschieben weiterer Körper gegen das Funktionsbauteil.

In einer besonders vorteilhaften Ausbildung des erfindungsgemäßen Verfahrens wird in einem ersten Schritt das Funktionsbauteil kraftgesteuert mit mindestens drei Backen zentriert und elastisch verformt. In einem zweiten Schritt spannen mindestens drei Planspannbacken das Funktionsbauteil axial plan gegen eine Planfläche und fixieren weggesteuert das Funktionsbauteil sicher für die Bearbeitung der Durchgangsöffnung. Die Planspannbacken werden über die Stirnflächen des Funktionsbauteils eingeschwenkt und dann durch eine Axialbewegung gegen die Stirnfläche des Funktionsbauteils gedrückt. Durch diese Vorgehensweise kann das Funktionsbauteil ohne Probleme in die Spannvorrichtung eingelegt und sicher fixiert werden. Die erforderliche Spannkraft der kraftgesteuerten Backen wird mit Federpaketen aufgebracht. So kann die erforderliche Spannkraft einfach durch Austausch der Federn im Backenfutter auf das zu bearbeitende Funktionsbauteil angepasst und somit unterschiedlichen Geometrien beziehungsweise Abmessungen Rechnung getragen werden.

Insbesondere mittels einer Ausgestaltung der Backen so dass bei der Einspannung des Funktionsbauteils durch mindestens drei Backen das Funktionsbauteil an zwei Kontaktzonen gespannt wird, so dass die Haltepunkte nahe dem Schnittpunkt einer Linie durch die Mitte der Durchgangsöffnung und der Spitze der später in der Durchgangsöffnung befindlichen Unrundheit bzw. Ovals befinden. So wird eine besonders vorteilhafte Verformung des Funktionsbauteils erreicht, die einen maximalen Effekt erzielt. Da bei einer Einspannung mit nahezu gegenüberliegenden Punkten und einem unsymmetrischen Bauteil wie beispielsweise einem Nocken die exakte Zentrierung durch die Backen sich schwierig gestaltet kann das Funktionselement bei einer weiteren vorteilhaften Ausgestaltung der Backen durch Hilfsspannvorrichtungen vor Kontakt der Backen zentriert werden.

Die Herstellung der Durchgangsöffnung erfolgt dabei gemäß dem in den vorherigen Absätzen beschriebenen Verfahren, bei welchem das Funktionsbauteil zunächst vorgespannt und dann mit einem herkömmlichen Bohrer die Durchgangsöffnung eingebracht wird. Durch das anschließende Entspannen verformt sich die Durchgangsöffnung beispielsweise in der Art eines Ovals, was bei einem thermischen Fügen mit einer Welle, beispielsweise einer Nockenwelle, dazu führt, dass nach einem Erkalten des erhitzten Funktionsbauteils bzw. einem sich Ausdehnen der gekühlten Welle lediglich gleichförmig auf die Welle einwirkende Radialkräfte vorhanden sind, die keine oder zumindest keine nennenswerte Verformung der Welle bewirken.

Durch die ovale Form der Durchgangsöffnung des Funktionsbauteils wird das Fügespiel zwischen dem Funktionsbauteil und der Welle durch den kurzen Durchmesser des Ovals bestimmt. Damit dieses Fügespiel durch das Einbringen der ovalen Form der Durchgangsöffnung nicht beeinträchtigt wird, wird in einer weiteren vorteilhaften Ausbildung des erfindungsgemäßen Verfahrens das Funktionsbauteil während des Fügevorgangs, insbesondere während des Einfahrens der Welle in die Durchgangsöffnung des erwärmten Funktionsbauteils, derart von einer Greifeinrichtung mit mindestens zwei Greifbacken gehalten, das sich eine elastische Verformung des Funktionsbauteils analog zur Bearbeitung der Bohrung einstellt und somit die ovale Form der Durchgangsöffnung nahezu wieder kreisförmig wird. Damit vergrößert sich das zur Verfügung stehende Fügespiel deutlich, beziehungsweise die Überdeckung zwischen Funktionsbauteil und Welle kann vergrößert werden.

Weitere Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Backenspannvorrichtung zum Spannen eines Funktionsbauteils, hier eines Nockens, während des Einbringens einer Durchgangsöffnung,
- Fig. 2: eine Darstellung wie in Fig. 1, jedoch mit einer Backenspannvorrichtung mit vier Backen,
- Fig. 3: eine schematisierte und übertrieben dargestellte Verformung der unrunden Durchgangsöffnung im entspannten Zustand,
- Fig. 4: eine Schnittdarstellung durch eine Nockenwelle,
- Fig. 5 a-d: eine Backenspannvorrichtung zum Spannen von Funktionsbauteilen, hier von einem Nocken, mit der Darstellung verschiedener Spannzustände der Backen,
- Fig. 6: eine Greifeinrichtung zum Halten und elastischen Verformen eines Funktionsbauteils, hier von einem Nocken während des thermischen Fügevorgangs,
- Fig. 7: eine schematisierte Darstellung des kraftgesteuerten Spannens mit Federn mit einer Backenspannvorrichtung wie in Fig. 5,
- Fig. 8: eine weitere mögliche Ausführungsform der Spannvorrichtung mit unterschiedlich gestalteten Backen.

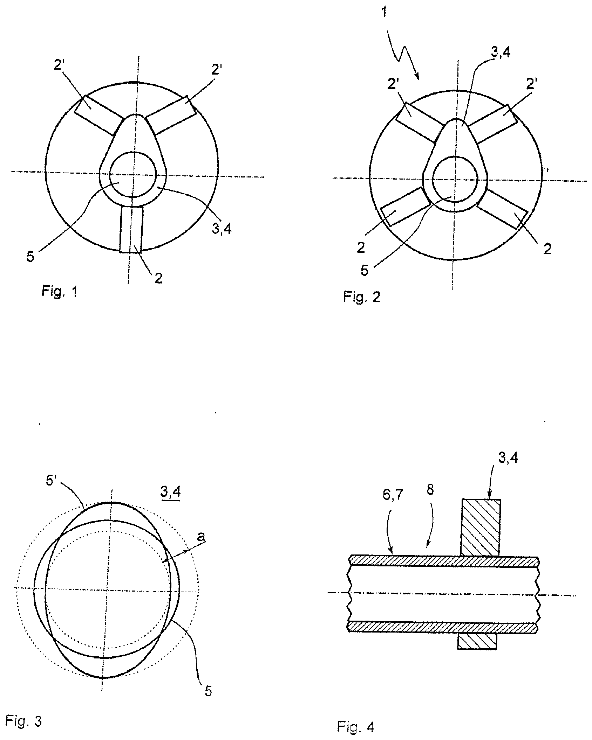

Entsprechend den Fig. 1 und 2 weist eine Backenspannvorrichtung 1 drei bzw. vier Backen 2,2' zum Spannen eines Funktionsbauteils 3, hier eines Nockens 4, auf. Der Nocken 4 wird somit in der Backenspannvorrichtung 1 eingespannt und mittels der einzelnen Backen 2,2' zumindest geringfügig elastisch verformt. In diesem elastisch verformten, das heißt insbesondere zusammengedrückten Zustand, wird nun mittels einer nicht gezeigten Maschine eine Durchgangsöffnung 5 eingebracht, beispielsweise gebohrt, geschliffen, gerieben, gedreht oder gefräst. Anschließend verfahren die Backen 2,2' in ihre Ausgangsstellung, wodurch sich das eingespannte Funktionsbauteil 3 bzw. der Nocken 4 entspannt. In diesem entspannten Zustand bildet sich aufgrund der elastischen Rückverformung aus der ursprünglich im gespannten Zustand runden Durchgangsöffnung 5 nunmehr eine unrunde Durchgangsöffnung 5', wie diese gemäß der Fig. 3 übertrieben dargestellt ist.

Nunmehr kann der Nocken 4 bzw. allgemein das Funktionsbauteil 3 erhitzt und eine zugehörige Welle 6 bzw. eine Nockenwelle 7, gekühlt werden. Beim thermischen Fügen des Funktionsbauteils 3 auf der Welle 6 wird ein Presssitz geschaffen, der im Wesentlichen radiale Kräfte auf die Welle 6 ausübt, so dass sich diese beim Herstellen des Schrumpfsitzes, das heißt beim Abkühlen der Funktionsbauteile 3 bzw. der Nocken 4 nicht oder lediglich marginal verformt und dadurch ihre runde Form behält. Eine derartige runde Form ist insbesondere für benachbart zu den Funktionsbauteilen 3 angeordnete Lagerstellen 8 von essentieller Bedeutung, da diese absolut rund sein müssen, um eine leichtgängige und langlebige Lagerung zu ermöglichen.

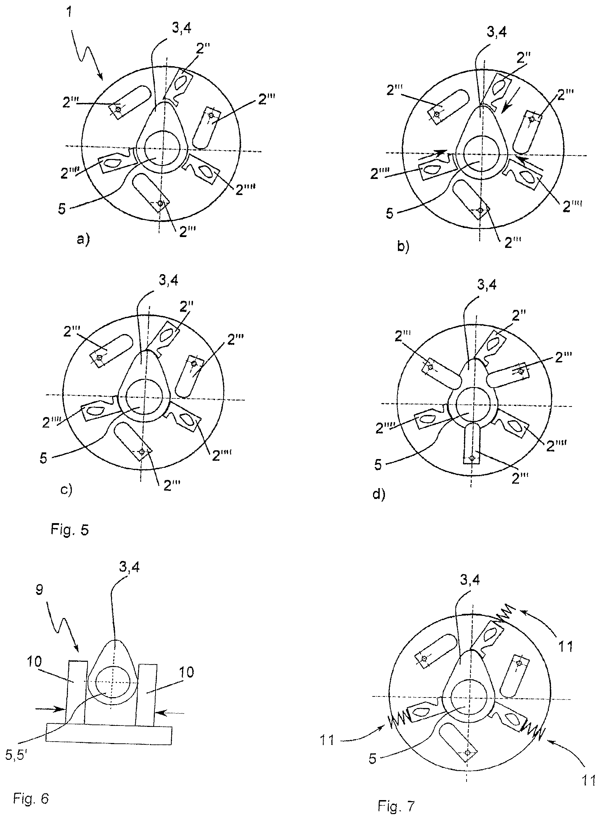

Das elastische Drücken bzw. Vorspannen des Funktionsbauteils 3 mittels der Backen 2,2' kann dabei kraft- oder weggesteuert erfolgen. Ebenso ist denkbar, dass zumindest ein Backen 2,2"" (vgl. auch Fig. 5) der Backenspannvorrichtung 1 mit einer höheren Kraft gegen das Funktionsbauteil 3 gedrückt, das heißt vorgespannt wird, als der zumindest eine andere Backen 2',2". Selbstverständlich können auch lediglich einzelne Backen 2,2' verstellbar sein. Die gemäß der Fig. 1 und 2 gezeigte Backenspannvorrichtung 1 soll dabei lediglich rein exemplarisch verdeutlichen, dass das mit der Durchgangsöffnung 5 zu versehende Funktionsbauteil 3 in individueller Weise zum Herstellen der unrunden Durchgangsöffnung 5' vorgespannt werden kann. Die Durchgangsöffnung 5' ist gemäß der Fig. 3 bei entspanntem Funktionsbauteil 3 oval ausgebildet, wobei der lange und der kurze Durchmesser um ca. 5 bis 25 µm differieren, was gemäß der Fig. 3 mit dem Bezugszeichen a dargestellt ist.

In Fig. 5 ist eine Backenspannvorrichtung 1 in einer besonders vorteilhaften Ausführung, in mehreren Spannzuständen a) bis d) abgebildet. Die Ausführung der Backenspannvorrichtung 1 in Fig. 5 zeichnet sich durch zwei verschiedene Sätze von je Backen 2",2"" und 2'" aus. Dabei sind die Backen 2",2"" dafür vorgesehen das Funktionsbauteil 3, in dem hier abgebildeten Fall einen Nocken 4, zu zentrieren und in gewünschter Weise kraftgesteuert elastisch zu Verformen. Weitere drei Spannbacken 2'" sind weggesteuert und dafür vorgesehen das Funktionsbauteil 3 fest gegen eine Planfläche zu spannen und somit sicher für die Bearbeitung der Durchgangsöffnung 5 zu positionieren.

In Schritt a) ist ein Nocken 4 abgebildet, der für die Bearbeitung in die Backenspannvorrichtung 1 eingelegt wurde. In Schritt b) bewegen sich die Backen 2",2"" auf den Nocken 4 zu und zentrieren und verformen den Nocken 4. Dabei können zur elastischen Verformung des Funktionsbauteils 3 die Backen 2"" stärker gegen das Funktionsbauteil gepresst werden als der Backen 2". In Schritt c) ist der Nocken 4 von den Backen 2",2"" zentriert und verformt worden. In Schritt d) wurden die Spannbacken 2'" über die Stirnfläche des Nocken 4 geschwenkt und in axialer Richtung derart verspannt, das der Nocken 4 sicher für eine Bearbeitung der Durchgangsöffnung 5 positioniert wurde.

Das kraftgesteuerte Zentrieren und Verformen des Funktionsbauteils 3 mittels der Backen 2",2"" kann mittels Federpaketen 11 erfolgen, wie es in der Fig. 7 schematisiert dargestellt wird. Wenn die Kraftaufbringung rein durch das vorgespannte Federpaket 11 erfolgt kann die eingeleitete Kraft genau gesteuert werden. Durch einen einfachen Austausch der Federn 11 kann die Backenspannvorrichtung 1 an verschiedene Funktionsbauteile 3 adaptiert werden, was ein einfaches und zuverlässiges Spannsystem ermöglicht.

Eine in Fig. 6 gezeigte Greifeinrichtung 9 ermöglicht es ein Funktionsbauteil 3, in dem dargestellten Fall einen Nocken 4, während des Fügevorgangs mittels Greifern 10 in der Fügeposition zu halten und das Funktionsbauteil 3 derart elastisch zu verformen, dass die ovale Durchgangsöffnung 5' wieder zu einer kreisrunden Durchgangsöffnung 5 wird und somit der Fügevorgang insbesondere das zur Verfügung stehende Fügespiel durch die ovale Bearbeitung der Durchgangsöffnung 5' kaum beeinträchtigt wird. Dies ist besonders vorteilhaft für einen prozesssicheren Fügevorgang.

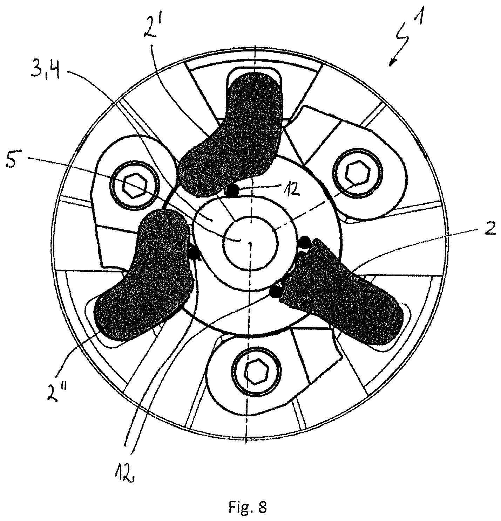

Betrachtet man die Spannvorrichtung 1 gemäß der Fig. 8, so weist diese drei Backen 2, 2' und 2" auf. Der Backen 2 greift dabei an einem Grundkreis des Funktionsbauteils 3, hier des Nockens 4, an, wobei zwischen dem Backen 2 und dem Funktionsbauteil 3 Spannelemente 12 einer Hilfsspannvorrichtung angeordnet sind. Diese Spannelemente 12 sind beispielsweise kugel- oder zylinderförmig und üblicherweise federvorgespannt. Die Hilfsspannvorrichtung soll dafür Sorge tragen, dass dass das Funktionsbauteil 3, respektive der Nocken 4, vor dem Kontakt mit den Backen 2, 2', 2" richtig positioniert und insbesondere zentriert wird, ohne hierfür allzu große Kräfte aufbringen zu müssen. Dies ist vorteilhaft, da sonst eine sichere Zentrierung durch die nahe Einspannung an Nockenspitze und genau gegenüberliegender Backe 2 nicht gewährleistet ist (Nocken 4 könnte schräg eingespannt werden).

Mit der gemäß der Fig. 8 gezeigten Spannvorrichtung 1 wird der Nocken 4 derart gespannt, das die der Nockenspitze gegenüberliegende Nockenseite, das heißt der Grundkreis, durch den Backen 2 abgestützt wird, so dass die Haltepunkte nahe dem Schnittpunkt einer Linie durch die Mitte der Durchgangsöffnung 5 und der Nockenspitze liegt. Wie der Fig. 8 dabei zu entnehmen ist, weist der Backen 2 eine gewellte Kontaktkontur auf, so dass er ohne die Spannelemente 12 an zwei Haltepunkten (Kontaktstellen) den Nocken 4 berühren würde. Gleiches gilt beim gezeigten Einsatz mit Spannelementen 12. Zumindest zwei weitere Backen 2', 2" spannen den Nocken 4 nahe der Nockenspitze beidseitig derselben.

Die mindestens drei Backen 2, 2', 2" spannen somit den Nocken 4 an zwei insgesamt vier Haltepunkten in zwei Kontaktbereichen, die im Bereich der Nockenspitze und des gegenüberliegenden Grundkreises liegen, so dass sich die Haltepunkte nahe dem Schnittpunkt einer Linie durch die Mitte der Durchgangsöffnung (5) und der Spitze der später in der Durchgangsöffnung (5) befindlichen Unrundheit befinden.

Die beiden Backen 2' und 2" weisen eine unsymmetrische Form auf, wodurch ein Kontakt (Haltepunkt) zum Nocken 4 möglichst nahe der Nockenspitze erreicht werden soll. Auch hier sind wiederum zwischen den Backen 2' und 2" und dem Nocken 4 Spannelemente 12 angeordnet.

Mit dem erfindungsgemäßen Einbringen einer bei entspanntem Funktionsbauteil 3 unrunden Durchgangsöffnung 5' kann man das bisher schlecht abschätzbare Pressverhalten exakt kontrollieren, wobei es insbesondere möglich ist, die beim Herstellen des Presssitzes auf die Welle 6 einwirkenden Kräfte so auszurichten, dass sich die Welle 6 nicht oder nur marginal hinsichtlich ihrer runden Außenkontur ändert, und dadurch insbesondere nicht nochmals nachgearbeitet werden muss, was erhebliche Kosten und Zeitvorteile bedeutet.

Die einzelnen Backen 2, 2',2",2"" der Backenspannvorrichtung 1 können dabei symmetrisch bezüglich des zu haltenden bzw. des vorzuspannenden Funktionsbauteils 3 angeordnet sein, wobei jedoch auch eine asymmetrische Anordnung denkbar ist.

Die im gespannten Zustand des Funktionsbauteils 3 hergestellte Durchgangsöffnung 5, beispielsweise eine Nockenbohrung ist dabei rund, wogegen nach einem Entspannen des Funktionsbauteils 3 diese Durchgangsöffnung 5 aufgrund der elastischen Rückverformung in eine unrunde Durchgangsöffnung 5' überführt wird. Die unrunde Durchgangsöffnung 5' ist dabei gemäß der Fig. 3 leicht überzeichnet dargestellt. In gefügtem Zustand aus der unrunden Durchgangsöffnung 5' wieder eine sich gleichmäßig um den Umfang der Welle, insbesondere der Nockenwelle anlegende Durchgangsöffnung 5, wodurch eine hohe Kraftübertragung und zugleich ein optimaler Presssitz erreicht werden können.

## Patentansprüche

1. Verfahren zum thermischen Fügen von unrunden Funktionsbauteilen (3) auf einer Welle (6), insbesondere zum thermischen Fügen von Nocken (4) auf einer Nockenwelle (7), bei welchem durch elastisches Drücken des Funktionsbauteils während des Einbringens einer runden Durchgangsöffnung (5) eine bei ungespanntem Funktionsbauteil (3) unrunde Durchgangsöffnung (5') geschaffen wird, die eine asymmetrische Verformung der Welle (6) nach dem thermischen Fügen des Funktionsbauteils (3) auf der Welle (6) zumindest minimiert.

2. Verfahren nach Anspruch 1,
**dadurch gekennzeichnet,**
**dass** das Funktionsbauteil (3) während des Einbringens der Durchgangsöffnung (5) mittels einer Backenspannvorrichtung (1) gedrückt wird.

3. Verfahren nach Anspruch 2,
**dadurch gekennzeichnet,**
**dass** zumindest ein Backen (2,2"") der Backenspannvorrichtung (1) mit einer höheren Kraft gegen das Funktionsbauteil (3) gedrückt wird als zumindest ein anderer Backen (2',2").

4. Verfahren nach einem der vorhergehenden Ansprüche,
**dadurch gekennzeichnet,**
**dass** das elastische Drücken kraftgesteuert und/oder weggesteuert genauso erfolgt, dass die Zentrierung des Funktionsbauteils (3) nach dem Fügen gegeben ist.

5. Verfahren nach einem der Ansprüche 1 bis 4,
**dadurch gekennzeichnet,**
**dass** das Funktionsbauteil (3) in der Backenspannvorrichtung (1) durch mindestens drei Backen (2",2"") kraftgesteuert zentriert und elastisch verformt und dann mit mindestens drei Planspannbacken (2"') weggesteuert, axial gegen eine Planfläche verspannt wird und anschließend die Durchgangsöffnung (5) des Funktionsbauteils (3) bearbeitet wird.

6. Verfahren nach Anspruch 5,
**dadurch gekennzeichnet,**
**dass** die mindestens drei Backen (2",2"") durch Federpakete (11) vorgespannt werden und die zur elastischen Verformung des Funktionsbauteils (3) erforderliche Anpresskraft durch Austausch der Federpakete (11) auf unterschiedliche zu bearbeitende Funktionsbauteile (3) angepasst werden kann.

7. Verfahren nach Anspruch 5 oder 6,
**dadurch gekennzeichnet,**
**dass** die mindestens drei Backen (2, 2', 2") den Nocken (4) an zwei Kontaktbereichen spannen, die im Bereich der Nockenspitze und des gegenüberliegenden Grundkreises liegen.

8. Verfahren nach einem der Ansprüche 5 bis 7,
**dadurch gekennzeichnet,**
**dass** die mindestens drei Backen (2, 2', 2") das Funktionsbauteil (3), respektive den Nocken (4), durch Spannelemente (12) zentrieren, bevor die Backen (2, 2', 2") das Funktionsbauteil (3) bzw. den Nocken (4) fest einspannen.

9. Verfahren nach einem der Ansprüche 1 bis 8,
**dadurch gekennzeichnet,**
**dass** die Durchgangsöffnung (5) gebohrt, geschliffen, gerieben, gedreht oder gefräst wird.

10. Verfahren nach einem der hervorgehenden Ansprüche,
**dadurch gekennzeichnet,**
**dass** das Funktionsbauteil (3) während des thermischen Fügevorgangs, insbesondere beim Einschieben der Welle (6) in die Durchgangsöffnung (5'), derart von einer Greifeinrichtung (9) gehalten wird, das die ovale Durchgangsöffnung (5') durch elastische Verformung wieder zu einer runden Durchgangsöffnung (5) wird.

## Claims

1. Method for the thermal joining of non-circular functional components (3) on a shaft (6), especially for the thermal joining of cams (4) on a camshaft (7), elastically compressing the functional component during introduction of a round through-opening (5) and creating a through-opening (5'), which is not round, when the functional component (3) is unstressed and at least minimises an asymmetrical deformation of the shaft (6) after the thermal joining of the functional component (3) on the shaft (6).

2. Method according to claim 1, **characterised in that** the functional component (3) is compressed by a jaw-type clamping device (1) during the introduction of the through-opening (5).

3. Method according to claim 2, **characterised in that** at least one jaw (2,2"") of the jaw-type clamping device (1) is pressed against the functional component (3) with a greater force than at least one other jaw (2',2").

4. Method according to any one of the preceding claims, **characterised in that** the elastic compression takes place in a force-controlled and/or distance-controlled manner, such that the centring of the functional component (3) is provided after joining.

5. Method according to any one of claims 1 to 4, **characterised in that** the functional component (3) is centred and elastically deformed in a force-controlled manner by at least three jaws (2",2"") in the jaw-type clamping device (1) and then steered away with at least three flat clamping jaws (2"'), clamped axially against a flat surface and then the through-opening (5) of the functional component (3) is machined.

6. Method according to claim 5, **characterised in that** the at least three jaws (2",2"") are prestressed by spring packages (11) and the pressing force necessary for the elastic deformation of the functional component (3) can be adapted to different functional components (3) to be machined through changing of the spring packages (11).

7. Method according to claim 5 or 6, **characterised in that** the at least three jaws (2, 2', 2") clamp the cam (4) in two contact regions, which lie in the region of the cam tip and of the opposite base circle.

8. Method according to any one of claims 5 to 7, **characterised in that** the at least three jaws (2, 2', 2") centre the functional component (3), or the cam (4), by means of clamping elements (12), before the jaws (2, 2', 2") securely clamp the functional component (3) or the cam (4).

9. Method according to any one of claims 1 to 8, **characterised in that** the through-opening (5) is drilled, ground, reamed, turned or milled.

10. Method according to any one of the preceding claims, **characterised in that** the functional component (3) is held by a gripping device (9) during the thermal joining process, especially during the introduction of the shaft (6) into the through-opening (5'), in such a manner that the oval through-opening (5') again becomes a round through-opening (5) through elastic deformation.

## Revendications

1. Procédé d'assemblage thermique de composants fonctionnels non circulaires (3) sur un arbre (6), en particulier pour un assemblage thermique de cames (4) sur un arbre à cames (7), par l'intermédiaire duquel en pressant de manière élastique le composant fonctionnel lors d'une insertion dans une ouverture traversante circulaire (5), une ouverture de passage non circulaire (5') est créée par un composant fonctionnel non sollicité (3), qui minimise au moins une déformation asymétrique de l'arbre (6) après l'assemblage thermique du composant fonctionnel (3) sur l'arbre (6).

2. Procédé selon la revendication 1,
**caractérisé en ce que** le composant fonctionnel (3) est pressé pendant l'insertion dans l'ouverture traversante (5) au moyen d'un dispositif de serrage à mâchoires (1).

3. Procédé selon la revendication 2,
**caractérisé en ce qu'**au moins une mâchoire (2, 2"") du dispositif de serrage à mâchoires (1) est pressée contre le composant fonctionnel (3) avec une force supérieure à celle d'au moins une autre mâchoire (2', 2").

4. Procédé selon l'une quelconque des revendications précédentes,
**caractérisé en ce que** la force de pression élastique survient par commande proportionnelle à la force et/ou la distance, et **en ce que** le centrage du composant fonctionnel (3) est mis en oeuvre après l'assemblage.

5. Procédé selon l'une quelconque des revendications 1 à 4,
**caractérisé en ce que** le composant fonctionnel (3) est centré avec commande proportionnelle à la force et déformé de manière élastique dans le dispositif de serrage à mâchoires (1) par au moins trois mâchoires (2", 2""), puis serré avec commande proportionnelle à la distance avec au moins trois mâchoires de serrage planes (2'"), axialement contre une surface plane, et enfin l'ouverture traversante (5) du composant fonctionnel (3) est traitée.

6. Procédé selon la revendication 5,
**caractérisé en ce que** les au moins trois mâchoires (2", 2"") sont sollicitées par des ensembles de ressorts (11), et la force de contact requise pour la déformation élastique du composant fonctionnel (3) peut être adaptée à différents composants fonctionnels (3) à usiner par remplacement des ensembles de ressorts (11).

7. Procédé selon la revendication 5 ou 6,
**caractérisé en ce que** les au moins trois mâchoires (2, 2', 2") serrent la came (4) au niveau de deux zones de contact qui sont situées dans la zone de la pointe de came et du cercle de base opposé.

8. Procédé selon l'une quelconque des revendications 5 à 7,
**caractérisé en ce que** les au moins trois mâchoires (2, 2', 2") centrent le composant fonctionnel (3), respectivement la came (4), au moyen d'éléments de serrage (12) avant que les mâchoires (2, 2', 2") serrent fermement le composant fonctionnel (3) ou la came (4).

9. Procédé selon l'une quelconque des revendications 1 à 8,
**caractérisé en ce que** l'ouverture traversante (5) est percée, découpée, taillée, tournée ou fraisée.

10. Procédé selon l'une quelconque des revendications précédentes,
**caractérisé en ce que** le composant fonctionnel (3) pendant le processus d'assemblage thermique, en particulier lors de l'insertion de l'arbre (6) dans l'ouverture traversante (5'), est maintenu par un dispositif de préhension (9), de sorte que l'ouverture traversante ovale (5') devient à nouveau une ouverture traversante circulaire (5) par déformation élastique.
